# FASCICULE DE BREVET EUROPEEN

(11) **EP 3 720 586 B1**
(45) Date de publication et mention de la délivrance du brevet: **09.03.2022**
(21) Numéro de dépôt: 18833913.9
(22) Date de dépôt: 03.12.2018
(51) Int. Cl.: B01D 45/04, B01D 45/08, B01D 46/10, F01M 13/04

(54) **SYSTEME DE DECANTATION D'HUILE POUR UN MOTEUR A COMBUSTION INTERNE**
SYSTEM ZUM KLÄREN EINES MOTORÖLS
SYSTEM TO CLARIFY A MOTOR OIL

(30) Priorité: 05.12.2017 FR 1761644
(43) Date de publication de la demande: 14.10.2020
(73) Titulaire: NOVARES France, 92140 Clamart (FR)
(72) Inventeur: MAESEELE, Christophe, 62138 Douvrin (FR); PECH, Christophe, 75020 Paris (FR); DEMANGEOT, Jérôme, 62350 Calonne Sur La Lys (FR)
(74) Mandataire: Germain Maureau
(86) Numéro de dépôt international: PCT/FR2018/053092
(87) Numéro de publication internationale: WO 2019/110908

(56) Documents cités:
- WO-A1-2014/160870
- WO-A2-2005/052288
- US-A1- 2011 023 429
- US-A1- 2014 059 985

## Description

La présente invention concerne un système de décantation pour un moteur à combustion interne.

Au cours de son fonctionnement, un moteur à combustion interne produit des gaz de fuite dits gaz « blow-by » ou gaz de carter, c'est-à-dire des gaz qui sont enfermés dans le carter moteur. Ces gaz sont produits lors du fonctionnement normal du moteur ; en effet, des gaz s'échappent des chambres de combustion en passant le long des segments des pistons et fuient vers le carter moteur. Ils transitent dans le bas carter moteur où ils se chargent en gouttelettes d'huile.

Les gaz de fuite doivent être évacués du carter moteur pour ne pas mettre ce dernier en surpression.

Les gaz de fuite étant chargés de gouttelettes d'huile, ils ne peuvent pas être rejetés dans l'atmosphère ; cela est interdit par les normes anti pollution en vigueur. Les gaz de fuite sont donc réintroduits à l'admission après avoir été débarrassés des gouttelettes d'huile dont ils sont chargés.

Il est important que l'opération de nettoyage des gaz de fuite soit la plus efficace possible pour au moins trois raisons.

L'introduction de gaz de fuite chargés d'huile pour les faire bruler dans les cylindres augmente l'émission de particules toxiques. Cela détériore le rendement du moteur et, enfin, cela augmente la consommation d'huile du moteur.

Pour cela, il existe des dispositifs de séparation qui nettoient les gaz de fuite en capturant les gouttelettes d'huile ; ces dispositifs de séparation peuvent agir par décantation.

On connaît, par exemple, par le document FR-A-2984175, un dispositif de séparation d'huile fonctionnant par décantation.

Pour que l'opération de séparation s'effectue avec efficacité, il importe que les gaz de fuite soient introduits dans le dispositif de séparation avec une vitesse suffisante.

Or, dans certaines conditions de fonctionnement d'un moteur, les gaz de fuite sont à des vitesses qui ne permettent pas une épuration satisfaisante.

Dans ce contexte technique, un but de l'invention est de proposer un système de décantation améliorant les performances de séparation des gouttelettes d'huile présentes dans un gaz de fuite.

L'invention concerne un système de décantation d'huile selon la revendication 1.

Ainsi, l'invention propose un dispositif de décantation qui crée une aspiration réalisée par une pompe à éjecteur qui permet de palier ou de s'additionner à l'aspiration moteur pour permettre de traiter les gaz de fuite dans le dispositif de séparation avec une efficacité optimale.

Selon plusieurs caractéristiques de l'invention prises isolement ou de manière combinée :
- - la pompe à éjecteur comprend (i) un corps tubulaire dont une extrémité comprend un embout de liaison à une source de gaz propulseur et dont la seconde extrémité comprend une buse et (ii) une tuyère disposée en regard du dispositif de séparation, la buse débouchant dans la tuyère.
- la pompe à éjecteur comprend un clapet anti retour.
- le système de décantation comprend une fenêtre obturée par un volet mobile, la fenêtre délimitant le passage secondaire vers le dispositif de séparation.
- le système de décantation comprend une paroi dont une face amont reçoit la tuyère et dont une face aval reçoit le dispositif de séparation, la tuyère et le dispositif de séparation étant en communication par une ouverture formée dans la paroi.
- la tuyère est venue de moulage avec la paroi.
- l'ouverture pratiquée dans la paroi présente une zone supérieure semi circulaire et une zone inférieure en trapèze, la zone supérieure se trouvant en regard de la tuyère et la zone inférieure se trouve en regard de l'ouverture.
- le système de décantation comprend une paroi de matière qui s'étend entre la face extérieure de la tuyère et la paroi dans laquelle est ménagée la fenêtre formant le passage secondaire.
- le volet mobile est maintenu en position de fermeture par gravité.
- le dispositif de séparation comprend un clapet doté de moyens de décantation séparant les gouttelettes et un gaz propre.

Selon un autre aspect, l'invention concerne un moteur à combustion interne comprenant un système de décantation tel que décrit précédemment.

L'invention sera davantage comprise à la lecture de la description non limitative qui va suivre, faite en référence aux figures ci-annexées.
- Les figures 1, 2, 4 et 5 présentent, en vue longitudinale coupée, un système de décantation selon plusieurs régimes de fonctionnement ;
- La figure 3 est une vue à échelle agrandie illustrant le fonctionnement d'une pompe à éjecteur du système de décantation selon l'invention ;
- La figure 6 représente une variante du dispositif montré aux figures 1, 2, 4 et 5 ;
- Les figures 7 et 8 montrent une paroi et l'ouverture pratiquée dans cette paroi qui relier la pompe à éjecteur et le système de décantation ;
- La figure 9 est un graphe montrant l'efficacité spectrale à différents débits d'un système de décantation selon l'art antérieur et d'un système de décantation selon l'invention ;
- La figure 10 montre un moteur équipé d'un système de décantation selon l'invention.

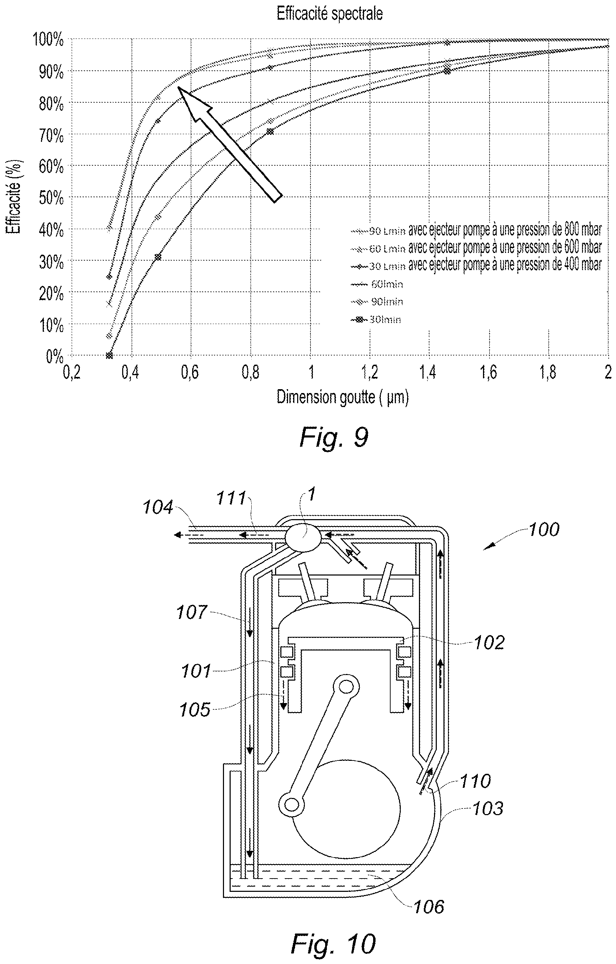

De façon schématique, un moteur 100 à combustion interne comme représenté sur la figure 10 comprend notamment un cylindre 101 dans lequel se déplace un piston 102, un carter 103 dans lequel barbotte de l'huile 106, et une conduite 104 d'aspiration. Au cours du fonctionnement du moteur, des gaz brûlés 105 s'infiltrent dans le carter 103 d'huile en passant entre le cylindre 101 et le piston 102 au travers de la segmentation. Leur évacuation provoque un flux gazeux dit de fuite 110 chargé de gouttelettes d'huile collectées au cours du barbotage dans l'huile 106.

Le moteur 100 est équipé d'un dispositif 1 de séparation d'huile selon l'invention.

Les gaz de fuite 110 sont acheminés en entrée du dispositif 1 de séparation d'huile selon l'invention, ce dernier permettant de débarrasser le flux de gaz de fuite 110 des gouttelettes d'huile qu'il contient. Les gouttelettes d'huile 107 capturées sont collectées et acheminées vers le carter 103 d'huile pour y être recyclées. Le flux gazeux 111 débarrassé des gouttelettes d'huile est évacué dans la conduite 104 d'aspiration d'air du moteur.

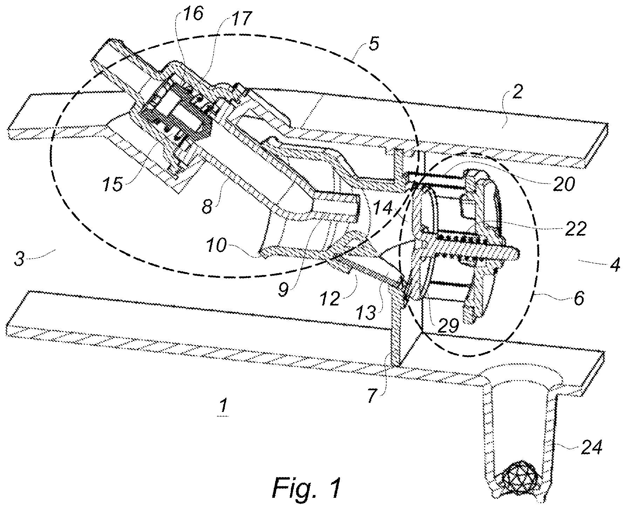

En se reportant à la figure 1, le système séparateur d'huile 1 selon l'invention comprend, un corps 2 tubulaire ayant un conduit d'entrée 3 de gaz de fuite 110 qui est connecté à un carter d'un moteur, un conduit de sortie 4 qui est connecté à l'admission de ce moteur, une pompe à éjecteur 5 destinée à accélérer la vitesse du gaz de fuite 110 et un dispositif de séparation 6 d'huile dans lequel le gaz de fuite 110 est débarrassé de ses gouttelettes d'huile 107. Le corps tubulaire 2 comprend une paroi 7 orientée perpendiculairement au sens du flux. La paroi 7 sépare, en amont, la pompe à éjecteur 5 et, en aval, le dispositif de séparation 6 d'huile. La paroi 7 présente une ouverture 14 qui met en communication la pompe à éjecteur 5 et le dispositif de séparation 6.

Comme cela apparait sur les figures, le système séparateur 1 comprend une pompe à éjecteur 5 apte à augmenter la vitesse du gaz de fuite 110 avant son introduction dans le dispositif de séparation 6.

L'objectif est, en augmentant la vitesse du gaz, d'augmenter l'effet de décantation d'huile et, ainsi, l'efficacité du dispositif de séparation 6.

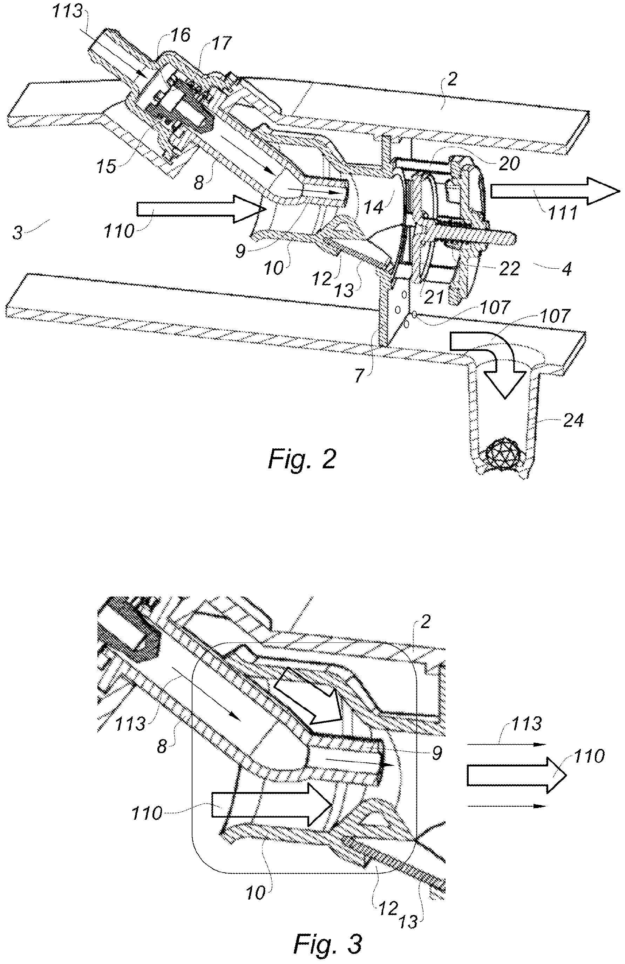

En se reportant à la figure 2, la pompe à éjecteur 5 fonctionne au moyen d'un gaz propulseur 113 qui, en pratique, provient d'un piquage réalisé sur le circuit de suralimentation (non représenté) du moteur et qui entraîne un gaz à accélérer, à savoir le gaz de fuite 110 qui provient du carter moteur.

La pompe à éjecteur 5 comprend un corps tubulaire 8 pourvu à son extrémité, d'une buse 9. La buse 9 débouche dans une tuyère 10 ; la tuyère 10 présente une géométrie conique et débouche elle-même sur le dispositif de séparation d'huile 6.

Dans l'exemple représenté sur les figures, la tuyère 10 est venue de moulage avec la paroi 7.

Ainsi, la pompe à éjecteur 5 comprend une tuyère 10 apte à recevoir le gaz de fuite 110 provenant d'un carter moteur par la conduite d'entrée 3 et une buse 9 alimentée par un gaz propulseur 113 dont l'extrémité débouche dans la tuyère 10.

On peut remarquer la structure relativement simple de la pompe à éjecteur 5 qui, en particulier, ne comprend que des composants fixes qui peuvent être aisément insérés dans le système de décantation et ce, sans surcout significatif.

La buse 9 est, ici, reliée au circuit de suralimentation du moteur (non représenté sur les figures). Le gaz propulseur 113 qui peut être piqué sur le circuit de suralimentation à une pression de l'ordre de 0 à 2 bars entraîne le gaz de fuite 110 qui circule dans la conduite d'entré 3. Le gaz de fuite 110 ainsi accéléré ressort de la tuyère 10 avec une vitesse augmentée. L'effet d'accélération créé par la pompe à éjecteur 5 est plus particulièrement représenté à la figure 3.

Le système 1 peut comprendre, en outre, une fenêtre 12 fermée par un volet 13 mobile. La fenêtre 12 est disposée entre le conduit d'entrée 3 et le dispositif de séparation 6 et est placée en parallèle de la tuyère 10. En pratique, il est prévu une paroi de matière plastique qui s'étend entre la surface extérieure de la tuyère 10 et la paroi 7 dans laquelle est ménagée la fenêtre 12 ; celle-ci forme ainsi un passage secondaire parallèle au passage principal formé par la tuyère 10.

Le volet 13 peut être une lame de matière plastique qui obture par gravité la fenêtre 12.

La fenêtre 12 est placée en dérivation de la tuyère 10. Ainsi, lorsque le volet 13 est ouvert, le gaz de fuite 110 arrivant par le conduit d'entrée 3 bénéficie d'un passage secondaire vers le dispositif de séparation 6; en cela, le gaz de fuite 110 n'est pas contraint de passer exclusivement par la tuyère 10.

Dans la forme de réalisation des figures 1 à 5, le corps 8 de la pompe à éjecteur 5 est pourvu d'un clapet anti retour 15 ; celui-ci est formé d'un obturateur 16 poussé par un ressort 17. Il est à noter que l'obturateur 16 peut présenter une géométrie à diamètre évolutif de façon à régler le débit passant au travers du clapet anti retour 15 en fonction de la course de l'obturateur 16.

Le dispositif de séparation 6 a pour fonction d'épurer le gaz de fuite 110 qui est donc chargé de gouttelettes d'huile pour en faire un gaz 110 épuré susceptible d'être réintroduit à l'admission du moteur.

Le dispositif de séparation 6 peut présenter diverses formes; dans l'exemple de réalisation de l'invention illustré, le dispositif de séparation 6 est de type cylindrique et agit par coalescence.

Ainsi il comprend, notamment, un corps 20 eu appui sur la paroi 7 qui est disposé en regard de la tuyère 10 et en regard de la fenêtre 12 de sorte que le dispositif de séparation 6 peut être alimenté par un flux provenant de la tuyère 10 ou provenant de manière combinée de la tuyère 10 et de la fenêtre 12.

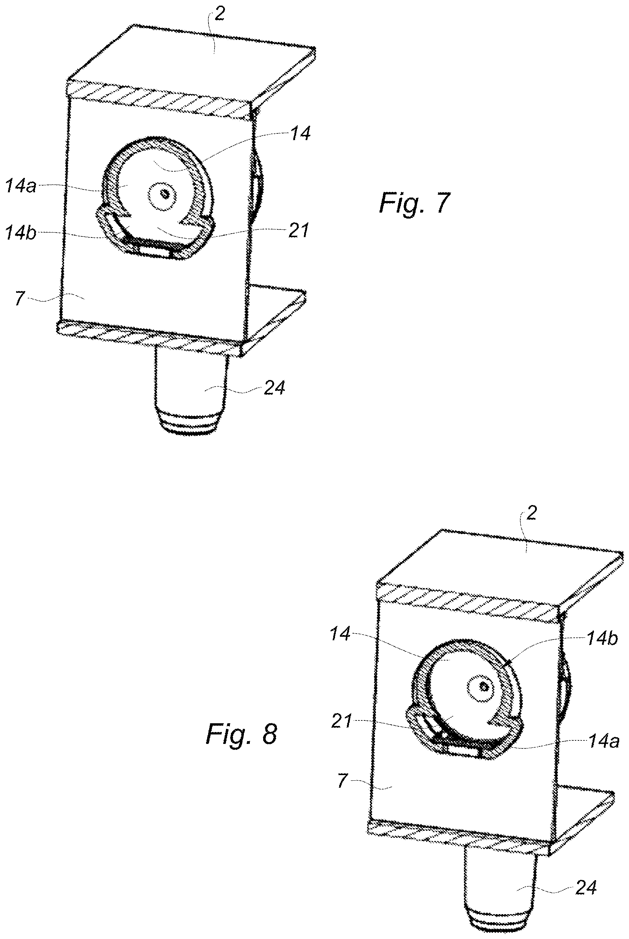

Les figures 7 et 8 montrent l'ouverture 14 de la paroi 7. L'ouverture 14 présente une zone supérieure 14a semi circulaire et une zone inférieure 14 b en trapèze.

La zone supérieure 14a se trouve en regard de la tuyère 10 tandis que la zone inférieure 14b se trouve en regard de l'ouverture 12.

Le principe fonctionnel du dispositif de séparation 6 est de forcer le gaz à emprunter une trajectoire radiale.

Dans la forme de réalisation illustrée sur les figures, le dispositif de séparation 6 présente un clapet 21 qui est poussé par un ressort 22 ; cette configuration est représentée à la figure 7.

Lorsqu'un gaz de fuite vient exercer une pression sur le clapet 21, celui-ci s'efface, comme on peut le voir à la figure 8, et contraint le gaz à emprunter une trajectoire sensiblement radiale. La forme de la conduite de sortie infléchit ensuite la trajectoire du gaz selon l'axe longitudinal. Il en résulte une double inflexion de la trajectoire du gaz, autour du profil du clapet 21. Entre ces deux inflexions, les gouttelettes d'huile, présentant une inertie plus importante que le gaz seul, suivent une trajectoire plus centrifuge et viennent heurter une paroi longitudinale du dispositif de séparation 2 qui les arrête, tandis que le gaz propre 111 poursuit son trajet dans la conduite de sortie 4.

Les gouttelettes d'huile 107 séparées du gaz sont collectées pour rejoindre le carter par un conduit 24.

Dans d'autres formes de réalisation, le dispositif de décantation 6 peut utiliser un principe de chicanes pour déshuiler le gaz de fuite.

Le système séparateur 1 selon l'invention peut présenter plusieurs régimes de fonctionnement qui assurent une efficacité maximale.

La figure 1 illustre le système de décantation 1 au repos c'est-à-dire un régime dans lequel le dispositif de séparation 2 n'est pas sollicité, le clapet 21 est donc en appui contre la paroi 7.

La figure 2 montre le système de décantation 1 dans un régime de fonctionnement dans lequel le circuit de suralimentation fournit un gaz propulseur 113 qui entraine le gaz de fuite 110 et en augmente la vitesse. Le gaz propulseur 113 pousse le clapet 15 et entre dans le corps 8 et s'échappe par la buse 9. Le clapet 15 s'ouvre proportionnellement au débit du gaz propulseur 113 arrivant du circuit de suralimentation ; ainsi, le gaz propulseur 113 est injecté au centre de la tuyère 10 et a un effet d'entrainement et d'accélération sur le gaz de fuite 110 comme on peut le voir plus précisément sur la figure 3.

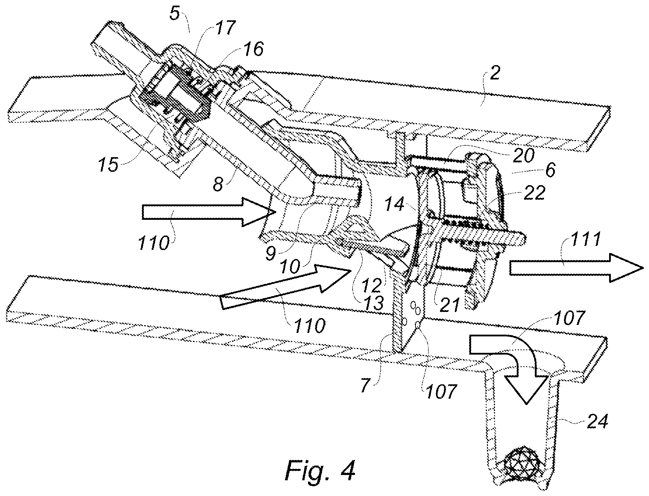

Il peut cependant se produire en fonction des conditions de fonctionnement du moteur, un régime dans lequel le gaz de suralimentation n'est pas disponible ; cela peut être, par exemple, le cas d'un moteur fonctionnant à forte charge pour lequel la totalité de la suralimentation est sollicitée pour l'alimentation des cylindres ce qui interdit de consacrer une fraction du gaz de suralimentation à d'autres fonctions. Dans ce cas de figure, qui est illustré à la figure 4, le clapet 15 obture la pompe à éjecteur 5 et le gaz de fuite 110 peut, en fonction de la quantité et de la pression avec lesquelles il entre dans le système de décantation 1, accéder au dispositif de séparation 6 soit en traversant la tuyère 10 soit en traversant la tuyère 10 et la fenêtre 12 comme cela est représenté à la figure 4. Le passage secondaire qui est formé par la fenêtre 12 adjacente à la tuyère 10 permet de limiter la perte de charge qui est créée par la pompe à éjecteur 5 lorsque celle-ci n'est pas en action du fait de l'indisponibilité de gaz propulseur.

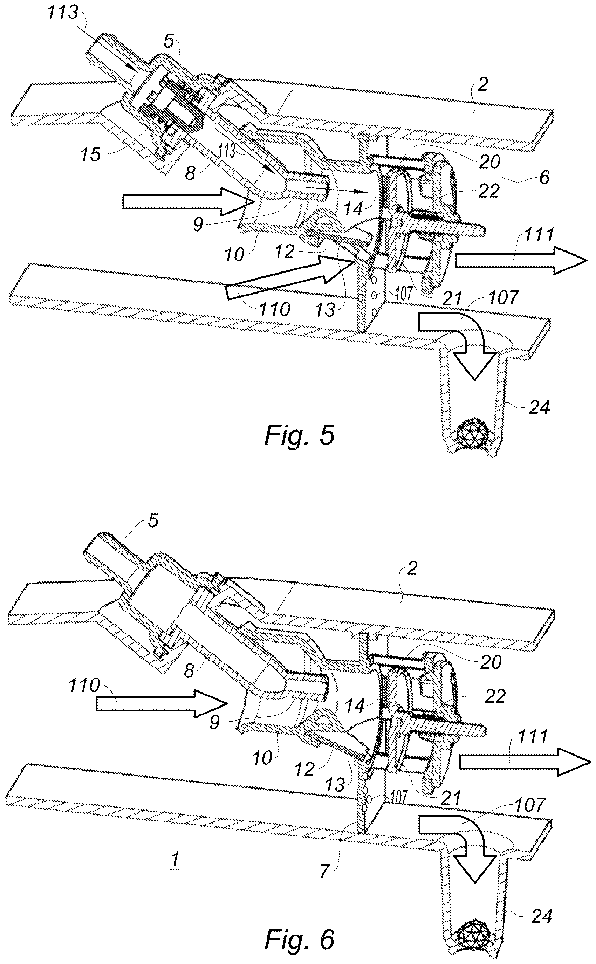

La figure 5 montre un régime de fonctionnement dans lequel la pompe à éjecteur 5 est en action et produit une accélération du flux entrant de gaz de fuite 110 et dans lequel le flux de gaz de fuite 110 passe également au travers du passage secondaire formé pour la fenêtre 12.

Il peut être envisagé une variante de réalisation de l'invention dans laquelle, comme cela est illustré à la figure 6, la pompe à éjecteur 5 est dépourvue de clapet. Dans cette forme de réalisation, le contrôle du gaz propulseur 113 peut être réalisé en amont de la pompe à éjecteur 5 à l'extérieur du strict périmètre du système de décantation 1. Il est également possible de donner à la buse une géométrie particulière permettant de gérer l'introduction du gaz propulseur.

Les courbes de la figure 9 illustrent clairement l'amélioration de l'efficacité spectrale de séparation d'huile. Ces courbes montrent l'efficacité en fonction du diamètre des gouttelettes d'huile à différent débit. On constate ainsi l'efficacité la plus faible (90% pour des gouttelettes de taille supérieure à 1,5 µm) se mesure à un débit de 30 L/min tandis que l'efficacité la plus élevée (90% pour des gouttelettes de taille supérieure à 0,6 µm) se mesure pour un débit de 90l/min avec une pression du gaz propulseur 113 à 800 mbar.

A débit constant par exemple 60 L/min, on constate que l'apport de gaz propulseur 113 à 600 mbar permet d'améliorer considérablement le déshuilage pour les gouttelettes de petits diamètres.

Ces courbes démontrent clairement l'effet que produit l'accélération du gaz de fuite 110 générée par la pompe à éjecteur 5 sur la qualité du déshuilage. Le flèche qui apparait en surimpression sur la figure 9 montre les courbes d'efficacité qui se rapprochent de 100 % et de gouttelettes de plus petits diamètres en fonction de l'augmentation de la pression du gaz propulseur passant dans la pompe à éjecteur 5.

L'invention fournit aussi un dispositif de décantation qui crée une aspiration réalisée par la pompe à éjecteur 5 permettant de palier ou de s'additionner à l'aspiration moteur présente dans la canalisation 104. Ceci permet ainsi de créer une pression négative dans le conduit d'entrée 3, cette pression n'étant pas négative sans l'utilisation de l'invention ci-dessus décrite.

Bien entendu, l'invention n'est pas limitée aux formes de réalisation décrite ci-dessus à titre d'exemples non limitatifs.

## Revendications

1. Système de décantation (1) d'huile pour un moteur à combustion interne comprenant (i) un dispositif de séparation (6) conçu pour piéger des gouttelettes d'huile (107) présentes dans un flux d'un gaz de fuite (110) et (ii) une pompe à éjecteur (5) placée en amont du dispositif de séparation (6) conçue pour accélérer le flux de gaz de fuite (110) avant son introduction dans le dispositif de séparation (6), **caractérisé en ce que** le système de décantation (1) comprend de plus un passage secondaire fermé par un volet (13) mobile, disposé en parallèle de la pompe à éjecteur (5) permettant d'augmenter la section de passage du flux de gaz de fuite (110), ledit passage secondaire commençant en amont de la pompe à éjecteur (5) et rejoignant le flux de gaz de fuite (110) en amont du dispositif de séparation (6).

2. Système de décantation (1) selon la revendication 1, **caractérisé en ce que** la pompe à éjecteur (5) comprend (i) un corps tubulaire (8) dont une extrémité comprend un embout de liaison à une source de gaz propulseur (113) et dont la seconde extrémité comprend une buse (9) et (ii) une tuyère (10) disposée en regard du dispositif de séparation (6), la buse (9) débouchant dans la tuyère (10).

3. Système de décantation (1) selon la revendication 2, **caractérisé en ce que** la pompe à éjecteur (5) comprend un clapet anti retour (15).

4. Système de décantation (1) selon l'une des revendications 1 à 3, **caractérisé en ce que** le système de décantation (1) comprend une fenêtre (12) obturée par un volet (13) mobile, la fenêtre (12) délimitant le passage secondaire vers le dispositif de séparation (6).

5. Système de décantation (1) selon l'une des revendications 2, 3 et 4 lorsqu'elle dépend de la revendication 2, **caractérisé en ce que** le système de décantation (1) comprend une paroi (7) dont une face amont reçoit la tuyère (10) et dont une face aval reçoit le dispositif de séparation (6), la tuyère (10) et le dispositif de séparation (6) étant en communication par une ouverture (14) formée dans la paroi (7).

6. Système de décantation (1) selon la revendication 5, **caractérisé en ce que** la tuyère (10) est venue de moulage avec la paroi (7).

7. Système de décantation (1) selon l'une des revendications 5 à 6, **caractérisé en ce que** l'ouverture (14) présente une zone supérieure (14a) semi circulaire et une zone inférieure (14b) en trapèze, la zone supérieure (14a) se trouvant en regard de la tuyère (10) tandis que la zone inférieure (14b) se trouve en regard de l'ouverture (12).

8. Système de décantation (1) selon l'une des revendications 5 à 7 lorsqu'elles dépendent de la revendication 4, **caractérisé en ce que** le système de décantation (1) comprend une paroi de matière qui s'étend entre la face extérieure de la tuyère (10) et la paroi (7) dans laquelle est ménagée la fenêtre (12) formant le passage secondaire.

9. Système de décantation (1) selon l'une des revendications 1 à 8, **caractérisé en ce que** le volet (13) mobile est maintenu en position de fermeture par gravité.

10. Système de décantation (1) selon l'une des revendications 1 à 9, **caractérisé en ce que** le dispositif de séparation (2) comprend un clapet (21) doté de moyens de décantation séparant les gouttelettes (107) et un gaz propre (111).

11. Moteur (100) à combustion interne comprenant un système de décantation (1) selon l'une des revendications 1 à 10.

## Patentansprüche

1. Öldekantierungssystem (1) für einen Innenverbrennungsmotor, umfassend (i) eine Abscheidevorrichtung (6), die gestaltet ist, um Öltröpfchen (107) abzufangen, die in einem Leckgasstrom (110) vorhanden sind, und (ii) eine Ejektorpumpe (5), die stromaufwärts der Abscheidevorrichtung (6) platziert ist, die gestaltet ist, um den Leckgasstrom (110) vor dessen Einführung in die Abscheidevorrichtung (6) zu beschleunigen, **dadurch gekennzeichnet, dass** das Dekantierungssystem (1) weiter einen Sekundärdurchlass, der durch eine bewegliche Klappe (13) geschlossen ist, umfasst, der parallel zur Ejektorpumpe (5) angeordnet ist, welcher erlaubt, den Durchlassquerschnitt des Leckgasstroms (110) zu erhöhen, wobei der Sekundärdurchlass stromaufwärts der Ejektorpumpe (5) beginnt und sich dem Leckgasstrom (110) stromaufwärts der Abscheidevorrichtung (6) anschließt.

2. Dekantierungssystem (1) nach Anspruch 1, **dadurch gekennzeichnet, dass** die Ejektorpumpe (5) (i) ein rohrförmiges Gehäuse (8), von dem ein Ende ein Verbindungsendstück mit einer Treibgasquelle (113) umfasst, und dessen zweites Ende eine Düse (9) umfasst, und (ii) eine Sprühdüse (10) umfasst, die gegenüber der Abscheidevorrichtung (6) angeordnet ist, wobei die Düse (9) in die Sprühdüse (10) mündet.

3. Dekantierungssystem (1) nach Anspruch 2, **dadurch gekennzeichnet, dass** die Ejektorpumpe (5) ein Rückschlagventil (15) umfasst.

4. Dekantierungssystem (1) nach einem der Ansprüche 1 bis 3, **dadurch gekennzeichnet, dass** das Dekantierungssystem (1) ein Fenster (12) umfasst, das durch eine bewegliche Klappe (13) geschlossen ist, wobei das Fenster (12) den Sekundärdurchlass zur Abscheidevorrichtung (6) begrenzt.

5. Dekantierungssystem (1) nach einem der Ansprüche 2, 3 und 4, wenn von Anspruch 2 abhängig, **dadurch gekennzeichnet, dass** das Dekantierungssystem (1) eine Wand (7) umfasst, von der eine stromaufwärtige Seite die Sprühdüse (10) empfängt und von der eine stromabwärtige Seite die Abscheidevorrichtung (6) empfängt, wobei die Sprühdüse (10) und die Abscheidevorrichtung (6) durch eine Öffnung (14), die in der Wand (7) gebildet ist, in Verbindung stehen.

6. Dekantierungssystem (1) nach Anspruch 5, **dadurch gekennzeichnet, dass** die Sprühdüse (10) in einem Stück mit der Wand (7) geformt ist.

7. Dekantierungssystem (1) nach einem der Ansprüche 5 bis 6, **dadurch gekennzeichnet, dass** die Öffnung (14) einen halbkreisförmigen oberen Bereich (14a) und einen trapezförmigen unteren Bereich (14b) aufweist, wobei sich der obere Bereich (14a) gegenüber der Sprühdüse (10) befindet, während sich der untere Bereich (14b) gegenüber der Öffnung (12) befindet.

8. Dekantierungssystem (1) nach einem der Ansprüche 5 bis 7, wenn von Anspruch 4 abhängig, **dadurch gekennzeichnet, dass** das Dekantierungssystem (1) eine Materialwand umfasst, die sich zwischen der Außenseite der Sprühdüse (10) und der Wand (7) erstreckt, in der das Fenster (12) eingearbeitet ist, wodurch der Sekundärdurchlass gebildet wird.

9. Dekantierungssystem (1) nach einem der Ansprüche 1 bis 8, **dadurch gekennzeichnet, dass** die bewegliche Klappe (13) durch Schwerkraft in der Schließposition gehalten wird.

10. Dekantierungssystem (1) nach einem der Ansprüche 1 bis 9, **dadurch gekennzeichnet, dass** die Abscheidevorrichtung (2) ein Ventil (21) umfasst, das mit Dekantierungsmitteln versehen ist, die die Tröpfchen (107) und ein sauberes Gas (111) abscheiden.

11. Innenverbrennungsmotor (100), ein Dekantierungssystem (1) nach einem der Ansprüche 1 bis 10 umfassend.

## Claims

1. An oil settling system (1) for an internal combustion engine comprising (i) a separation device (6) designed to trap oil droplets (107) present in a flow of a leakage gas (110) and (ii) an ejector pump (5) placed upstream of the separation device (6) designed to accelerate the flow of leakage gas (110) before introduction thereof into the separation device (6), **characterized in that** the settling system (1) further comprises a secondary passage closed by a movable shutter (13), disposed in parallel with the ejector pump (5) allowing increasing the passage section of the flow of leakage gas (110), said secondary passage starting upstream of the ejector pump (5) and joining the flow of leakage gas (110) upstream of the separation device (6).

2. The settling system (1) according to claim 1, **characterized in that** the ejector pump (5) comprises (i) a tubular body (8), one end of which comprises a fitting for connection to a source of propellant gas (113) and the second end of which comprises a pipe (9) and (ii) a nozzle (10) disposed opposite the separation device (6), the pipe (9) leading into the nozzle (10).

3. The settling system (1) according to claim 2, **characterized in that** the ejector pump (5) comprises a check valve (15).

4. The settling system (1) according to any of claims 1 to 3, **characterized in that** the settling system (1) comprises a window (12) sealed with a movable shutter (13), the window (12) delimiting the secondary passage to the separation device (6).

5. The settling system (1) according to any of claims 2, 3 and 4 when dependent on claim 2, **characterized in that** the settling system (1) comprises a wall (7) an upstream face of which receives the nozzle (10) and a downstream face of which receives the separation device (6), the nozzle (10) and the separation device (6) being in communication through an opening (14) formed in the wall (7).

6. The settling system (1) according to claim 5, **characterized in that** the tuyere (10) is integrally molded with the wall (7).

7. The settling system (1) according to any of claims 5 and 6, **characterized in that** the opening (14) has a semi-circular upper area (14a) and a trapezoidal lower area (14b), the upper area (14a) being located opposite the nozzle (10) whereas the lower area (14b) is located opposite the opening (12).

8. The settling system (1) according to any of claims 5 to 7 when dependent on claim 4, **characterized in that** the settling system (1) comprises a wall of material which extends between the external face of the nozzle (10) and the wall (7) in which the window (12) forming the secondary passage is formed.

9. The settling system (1) according to any of claims 1 to 8, **characterized in that** the movable shutter (13) is held in the closure position by gravity.

10. The settling system (1) according to any of claims 1 to 9, **characterized in that** the separation device (2) comprises a valve (21) provided with settling means separating the droplets (107) and a clean gas (111).

11. An internal combustion engine (100) comprising a settling system (1) according to any of claims 1 to 10.
